# EUROPÄISCHE PATENTANMELDUNG

(11) **EP 1 661 759 A1**
(43) Veröffentlichungstag der Anmeldung: **31.05.2006**
(21) Anmeldenummer: 05110990.8
(22) Anmeldetag: 21.11.2005
(51) Int. Cl.: B60Q 1/26, B60Q 1/32

(54) **Leuchte für Nutzfahrzeuge**

(30) Priorität: 27.11.2004 DE 102004057431
(71) Anmelder: Hella KG Hueck & Co., 59552 Lippstadt (DE)
(72) Erfinder: Pohl, Reiner, 59557, Lippstadt (DE)

(57) **Zusammenfassung**

Die Erfindung betrifft eine Leuchte (1) für Nutzfahrzeuge mit einem eine Lichtquelle (2) aufnehmenden Gehäuse (3), das Freimachungen aufweist zur Aufnahme von mindestens einer Lichtscheibe (5,7,7') für Umrisslicht und/oder Seitenmarkierungslicht und mit einem sich an das Gehäuse anschließenden Haltearm (4), in dem eine elektrische Zuleitung (11) für die Lichtquelle (2) gelagert ist und der auf einer dem Gehäuse (3) abgewandten Seite (12) mit einem Karosserieteil des Fahrzeugs verbunden ist, dadurch gekennzeichnet, dass der Haltearm (4) zumindest in einer Vorzugsrichtung elastisch nachgiebig ausgebildet ist.

## Beschreibung

Die Erfindung betrifft eine Leuchte für Nutzfahrzeuge mit einem eine Lichtquelle aufnehmenden Gehäuse, das Freimachungen aufweist zur Aufnahme von mindestens einer Lichtscheibe für Umrisslicht und/oder Seitenmarkierungslicht und mit einem sich an das Gehäuse anschließenden Haltearm, in dem eine elektrische Zuleitung für die Lichtquelle gelagert ist und der auf einer dem Gehäuse abgewandten Seite mit einem Karosserieteil des Fahrzeugs verbunden ist.

Aus der DE 196 27 554 C2 ist eine Leuchte für Nutzfahrzeuge bekannt, die zum einen aus einem Gehäuse besteht, in dem eine Lichtquelle untergebracht ist und an dem Freimachungen vorgesehen sind zur Aufnahme von mindestens einer Lichtscheibe für Umrisslicht bzw. Seitenmarkierungslicht. Zum anderen weist die Leuchte einen lang gestreckten Haltearm auf, der hohl ausgeführt ist, damit eine elektrische Zuleitung für die Lichtquelle Platz findet. Der Haltearm ist auf einer dem Gehäuse abgewandten Seite mit einem Karosserieteil fest verbunden.

Nachteilig an der bekannten Leuchte ist, dass lediglich das Gehäuse elastisch ausgebildet ist. Hierdurch kann nur eine relativ geringe stoßartige oder schwingende Belastung aufgenommen werden, so dass die Gefahr einer Beschädigung der Lichtquelle bzw. Beschädigung des Haltearmes nicht ausgeschlossen werden kann.

Aufgabe der vorliegenden Erfindung ist es daher, eine Leuchte für Nutzfahrzeuge derart weiterzubilden, dass die mechanische Beanspruchbarkeit derselben erhöht wird.

Zur Lösung dieser Aufgabe ist die Erfindung in Verbindung mit dem Oberbegriff des Patentanspruchs 1 dadurch gekennzeichnet, dass der Haltearm zumindest in einer Vorzugsrichtung elastisch nachgiebig ausgebildet ist.

Der besondere Vorteil der erfindungsgemäßen Leuchte besteht darin, dass durch einen elastisch nachgiebig ausgebildeten Haltearm die Leuchte in höherem Maße geeignet ist, stoßartige oder schwingende Belastungen aufzunehmen. Der Haltearm kann Schlägen oder Stößen aus vertikalen und/oder horizontalen Richtungen ausgesetzt sein, ohne dass der Haltearm bricht. Nach Wegfall der Beanspruchung bewegt sich der Haltearm selbsttätig in die ursprüngliche Ausgangsstellung zurück. Hierdurch kann zum einen die Lebensdauer des Haltearms verlängert und zum anderen der Fußgängerschutz im Verkehr verbessert werden.

Nach einer bevorzugten Ausführungsform der Erfindung ist der Haltearm lang gestreckt ausgebildet, wobei die elastisch nachgiebige Vorzugsrichtung in Längsrichtung des Haltearmes wirkt. Hierdurch ergibt sich die Federwirkung über die gesamte Länge des Haltearmes, so dass der Haltearm vorzugsweise insgesamt elastisch nachgiebig ausgebildet ist.

Nach einer Weiterbildung der Erfindung ist in dem Haltearm eine Schraubenfeder integriert, die zum einen ein elastisches Verformen des Haltearmes in Axialrichtung und/oder in Querrichtung ermöglicht.

Nach einer Weiterbildung ist der Haltearm aus einem gummiartigen Material hergestellt, so dass im Zusammenwirken mit der Feder eine elastische Verformbarkeit gewährleistet ist.

Nach einer ersten Variante der Erfindung kann die Feder während der Herstellung des Haltearms in denselben eingelagert sein. Dies kann beispielsweise durch Einpressen oder durch Einvulkanisieren erfolgen.

Nach einer zweiten Variante kann der Haltearm einen Aufnahmekanal aufweisen, in den die Feder nachträglich eingeschoben werden kann. Die Feder ist mit Spiel in dem Aufnahmekanal gelagert. Vorteilhaft können hierdurch die Herstellungskosten gering gehalten werden, da der Haltearm vorzugsweise ohnehin einen Hohlraum aufweist für die Aufnahme der elektrischen Zuführung.

Ein Ausführungsbeispiel der Erfindung wird nachfolgend anhand der Zeichnungen näher erläutert.

Es zeigen:
- Figur 1: einen Vertikalschnitt durch eine erfindungsgemäße Leuchte und
- Figur 2: einen Horizontalschnitt durch die Leuchte entlang der Linie II-II in Figur 1.

Eine erfindungsgemäße Leuchte 1 für Nutzfahrzeuge (Nutzkraftwagen oder Anhänger für Nutzkraftwagen) besteht im Wesentlichen aus einem eine Lichtquelle 2 aufnehmenden Gehäuse 3 und einem sich an das Gehäuse 3 anschließenden lang gestreckten Haltearm 4. Das Gehäuse 3 und der Haltearm 4 sind vorzugsweise einstückig miteinander verbunden und bestehen aus einem Elastomer-Material, vorzugsweise aus einem Gummimaterial.

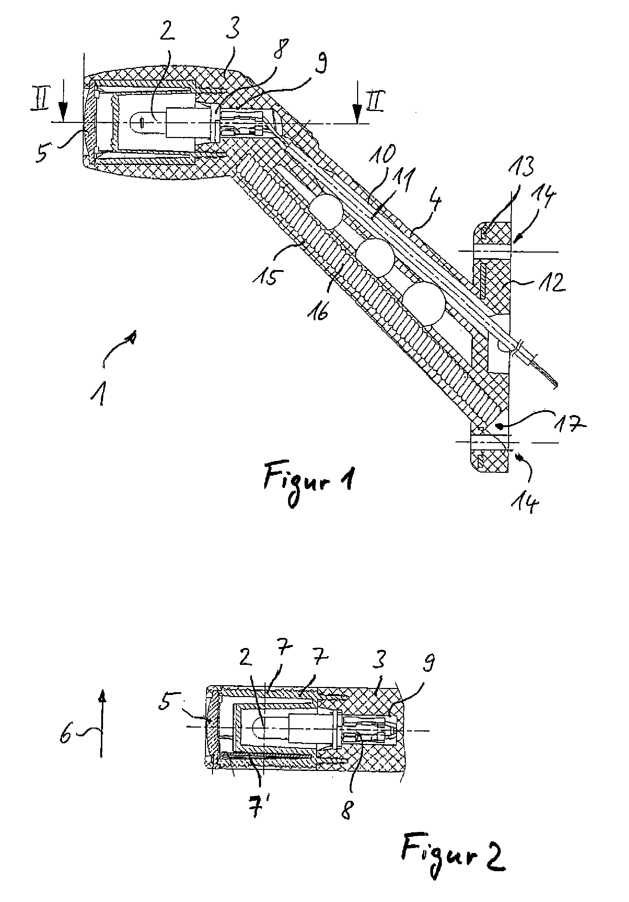

Wie aus Figur 2 besser zu ersehen ist, weist das Gehäuse 3 an einer Stirnseite eine Freimachung zur Aufnahme einer Lichtscheibe 5 für ein Seitenmarkierungslicht auf. Die Lichtscheibe 5 ist vorzugsweise gelb eingefärbt ausgebildet. Auf einer in Fahrtrichtung 6 vorderen Seite und einer hinteren Seite des Gehäuses 3 weist dasselbe jeweils eine Freimachung für eine vordere Lichtscheibe 7 bw. eine hintere Lichtscheibe 7' für Umrisslicht auf. Die vordere Lichtscheibe 7 ist glasklar ausgebildet und die hintere Lichtscheibe 7' ist rot eingefärbt ausgebildet.

Die als Glühlampe ausgebildete Lichtquelle 2 ist mit ihrer Fassung 8 festsitzend in einer zum Haltearm 4 hin gewandten Öffnung 9 des Gehäuses 3 angeordnet. Der Haltearm 4 weist einen Zuführungskanal 10 auf, in dem eine elektrische Zuleitung 11 gelagert ist und die mit freien Enden mit Kontakten der Lichtquelle 2 elektrisch verbunden ist. Der Zuführungskanal 10 erstreckt sich bis zu einem Flanschbereich 12 des Haltearmes 4, der auf einer dem Gehäuse 3 abgewandten Seite des Haltearmes 4 angeordnet ist und mit einer Versteifungsplatte 13 verstärkt ausgebildet ist. Der Flanschbereich 12 weist Bohrungen 14 auf, so dass er durch Schraubverbindung mit einem nicht dargestellten Karosserieteil des Nutzkraftfahrzeugs verbindbar ist.

Der Haltearm 4, der lang gestreckt ausgebildet ist, weist einen sich in Längsrichtung desselben erstreckenden Aufnahmekanal 15 auf, in dem eine Schraubendruckfeder 16 gelagert ist. Der Aufnahmekanal 15 erstreckt sich parallel zu dem Zuführungskanal 10 und weist eine zu der Länge des Haltearms 4 korrespondierende Länge auf. Der Aufnahmekanal 15 weist einen zu der Feder 16 korrespondierenden Querschnitt auf, derart, dass die Feder 16 mit Spiel in dem Aufnahmekanal 15 gelagert ist. Auf einer dem Gehäuse 3 abgewandten Seite weist der Aufnahmekanal 15 eine Einführöffnung 17 auf, durch die die Schraubendruckfeder 16 nach hergestelltem Haltearm 4 eingesetzt und durch nicht dargestellte Verschlussmittel verschließbar ist.

Alternativ kann die Druckfeder 16 auch als Zugfeder ausgebildet sein. Wesentlich ist, dass im Zusammenwirken mit dem elastischen Material des Haltearms 4 eine elastische Nachgiebigkeit des Haltearms 4 bereitgestellt wird, so dass stoßartige bzw. schwingende Belastungen durch den Haltearm aufgenommen werden können. Durch die Orientierung der Feder 16 in Längsrichtung des Haltearms 4 ist eine Vorzugsrichtung der elastischen Nachgiebigkeit des Haltearms 4 vorgegeben, die sich in Längsrichtung des Haltearms 4 erstreckt. Darüber hinaus wird aber auch ein Verbiegen des Haltarms 4 in einem relativ großen Winkelbereich gewährleistet, so dass die Gefahr der Beschädigung bzw. Einschränkung der Funktionstüchtigkeit der Leuchte 1 einerseits und eine Fußgängergefährdung andererseits wesentlich verringert wird.

Die Feder 16 besteht vorzugsweise aus einem Metallmaterial. Nach einer nicht dargestellten alternativen Ausführungsform kann die Feder 16 auch während des Herstellungsprozesses des Haltearms in demselben eingelagert sein. Dies kann beispielsweise durch Einpressen oder Einvulkanisieren erfolgen.

## Patentansprüche

1. Leuchte für Nutzfahrzeuge mit einem eine Lichtquelle aufnehmenden Gehäuse, das Freimachungen aufweist zur Aufnahme von mindestens einer Lichtscheibe für Umrisslicht und/oder Seitenmarkierungslicht und mit einem sich an das Gehäuse anschließenden Haltearm, in dem eine elektrische Zuleitung für die Lichtquelle gelagert ist und der auf einer dem Gehäuse abgewandten Seite mit einem Karosserieteil des Fahrzeugs verbunden ist, **dadurch gekennzeichnet, dass** der Haltearm (4) zumindest in einer Vorzugsrichtung elastisch nachgiebig ausgebildet ist.

2. Leuchte nach Anspruch 1, **dadurch gekennzeichnet, dass** der Haltearm (4) lang gestreckt und in Längsrichtung desselben elastisch nachgiebig ausgebildet ist.

3. Leuchte nach Anspruch 1 oder 2, **dadurch gekennzeichnet, dass** in dem Haltearm (4) eine Schraubenfeder (16) integriert ist.

4. Leuchte nach einem der Ansprüche 1 bis 3, **dadurch gekennzeichnet, dass** der Haltearm (4) aus einem gummiartigen Material besteht.

5. Leuchte nach einem der Ansprüche 1 bis 4, **dadurch gekennzeichnet, dass** die Feder (16) während der Herstellung des Haltearms (4) in denselben eingelagert wird.

6. Leuchte nach einem der Ansprüche 1 bis 4, **dadurch gekennzeichnet, dass** der Haltearm (4) einen Aufnahmekanal (15) aufweist, in den die Feder (16) einschiebbar ist.

7. Leuchte nach Anspruch 6, **dadurch gekennzeichnet, dass** der Aufnahmekanal (15) auf einer dem Gehäuse (3) abgewandten Seite verschließbar ausgebildet ist.

8. Leuchte nach Anspruch 6 oder 7, **dadurch gekennzeichnet, dass** der Aufnahmekanal (15) derart ausgebildet ist, dass die Feder (16) mit Spiel in demselben gelagert ist.

9. Leuchte nach einem der Ansprüche 1 bis 8, **dadurch gekennzeichnet, dass** der Haltearm (4) und das Gehäuse (3) einstückig miteinander verbunden sind.

10. Leuchte nach einem der Ansprüche 1 bis 9, **dadurch gekennzeichnet, dass** der Haltearm (4) einen Zuführungskanal (10) aufweist zur Aufnahme der elektrischen Zuleitung (11)
